# EUROPEAN PATENT APPLICATION

(11) **EP 2 290 228 A2**
(43) Date of publication of application: **02.03.2011**
(21) Application number: 10172036.5
(22) Date of filing: 05.08.2010
(51) Int. Cl.: F03D 7/02

(54) **Blade pitch lock device**

(30) Priority: 18.08.2009 SE 0950591
(71) Applicant: GE Wind Energy (Norway) AS, 0278 Oslo (NO)
(72) Inventor: Lindberg, Mikael, 652 30, Karlstad (SE); Hedberg, Johan, 663 92, Hammaro (SE)
(74) Representative: Bedford, Grant Richard

(57) **Abstract**

The present invention relates to a locking device 1 for locking a turbine blade of a wind power plant at a predetermined pitch angle, which wind power plant comprises a rotor hub 2 and at least one turbine blade where the blade root of the at least one turbine blade is connected to the rotor hub through a pitch bearing so that the pitch angle of the at least one turbine blade is adjustable by turning of the at least one turbine blade about its longitudinal axis relative to the rotor hub 2 and wherein the device for locking the turbine blade comprises a mechanical snap-in mechanism which in a locked position prevents the at least one turbine blade from turning about its longitudinal axis thus fixating the at least one turbine blade in the predetermined pitch angle.

## Description

The present invention relates generally to a device for locking a turbine blade of a wind power plant at a predetermined pitch angle which wind power plant comprises a rotor hub and at least one turbine blade where the blade root of the at least one blade is connected to the rotor hub through a pitch bearing so that the pitch angle of the at least one blade is adjustable by turning of the at least one blade about its longitudinal axis relative to the rotor hub.

Adjusting the pitch angle of turbine blades is a way of controlling the rotational speed (rpm) of a wind turbine. In order to reduce the load or completely stop rotation the blades are directed to a feathered position where the wind will not engage with the blade and the blades are urged to stall and rotation of the turbine will decrease and/or stop. Once turbine is stopped and the blades have been put into a parked position it is important that the pitch angle of the blades does not accidentally change since this would cause the blades to catch the air starting an uncontrolled rotation of the turbine. For this reason, some sort of locking mechanism for the blades is needed, and is especially important during maintenance work where events of accidental rotation may cause substantial damages to components and indeed to personnel performing such maintenance on the wind turbine. Another reason to shut down the turbine is extreme wind conditions where the design of a wind power plant is unable to cope. In such a case blades are put into a no-power, feathered position for protecting the wind power plant.

Heretofore, turbine blades have been kept in place by hydraulic pressure systems or preventing means in the form of disc brakes or pneumatic means applied onto the blades ensuring that aerodynamic forces acting on the blades will not cause the pitch to alter and the turbine to start turning. A disadvantage with many like conventional systems is that they depend on an external force in order to function properly, which adds a certain risk of failure for instance in case of a power outage. Also, many adjustment mechanisms and lockouts depend on electrical control systems which are complicated and expensive both to set up and to maintain.

An example of preventing mean comprising disc brake is disclosed in US6428274 where an activatable lockout is connected to each rotor blade and prevents turning of the rotor blades into operating position, but allows turning into feathered position. Further, GB2191823 discloses adjustment means for ram air turbine rotor blades including lockout which, when activated, turns the blades to a feathered pitch and locks it in that position.

It is an object of the present invention to provide an improved locking device for locking a turbine blade in a predetermined pitch angle, preferably where the predetermined pitch angle corresponds to a feathered position of the turbine blade.

According to embodiments of the invention, a system for a wind power plant is provided that will increase security and reliability and that is able to keep the blades of a wind power plant locked in a predetermined position independently of any control system or electrical system. This, and further objects of the invention, is addressed by a locking device for a wind power plant, which wind power plant comprises a rotor hub and at least one turbine blade where the blade root of the at least one blade is connected to the rotor hub through a pitch bearing so that the pitch angle of the at least one blade is adjustable by turning of the at least one blade about its longitudinal axis relative to the rotor hub and wherein the locking device comprises a mechanical snap-in mechanism which in a locked position prevents the at least one turbine blade from turning about its longitudinal axis thus fixating the blade in the predetermined pitch angle.

A locking device according to various aspects of the invention leads to a number of advantages, whereof the most beneficial are the following:
- a robust and reliable blade lock mechanism;
- a blade lock device which is inexpensive and easy to install, maneuver and maintain;
- a locking device having a mechanical locking which is independent of any additional power supply in order to lock the blades of a wind power plant, leading to a high security blade lock system with no risk of uncontrolled alteration of the pitch angle.

A locking device according to various embodiments of the present invention is arranged to lock a turbine blade in one predetermined pitch angle. Certain embodiments are specifically advantageous for locking turbine blades into a feathered pitch, for instance during maintenance work, but it may also be used for locking blades into other pitch angles. The position where a blade is locked by a device according to various embodiments of the invention depends on where onto the pitch bearing the locking device has been mounted. As an example, in order to lock a turbine blade into a feathered pitch the device is mounted onto pitch bearing in such a position that when the blade has turned relative to the hub into the feathered angle the snap-in mechanism of the locking device is activated, fixating the blade relative to the hub.

It is understood that general operation of the wind power plant is known in the art and therefore will not be described in detail. For instance, the wind power plant includes a blade pitch system whereby the pitch angle of the turbine blades may be changed and locked into different angles in a continuous manner with respect to a wind direction. Blade pitch system further includes one or more actuators coupled to hub and blades for changing the pitch angle of blade by turning about its longitudinal axis relative to the rotor hub. Actuators may be driven by any suitable means such as, but not limited to, hydraulic fluid, electrical power, and/or mechanical power. Blade pitch system further includes means for continuously fixating the blades in any desired pitch angle, as is known in the art, for instance by means of a gear system and/or with the aid of disc brakes. A blade lock device according to the invention, however, is used for mechanically locking the blade into one specific pitch angle selected for a certain purpose. One such purpose would be to lock the blade in a feathered position for instance during maintenance work, or due to extreme wind conditions.

According to one aspect of the invention the locking device comprises one hub part which is permanently connected to the hub and one blade part which is permanently connected to the turbine blade. Each part comprises a mounting plate which is permanently attached to the hub and the blade respectively. When locking a blade in a certain pitch the blade is turned by actuators relative to the hub until the blade mounting plate is brought adjacent to the hub mounting plate. In this position the snap-in mechanism of the locking device is activated causing the hub- and blade parts to connect to one another by means of form-fitting thus preventing further turning of the turbine blade.

According to another aspect of the invention the blade part comprises at least a first and a second locking block mounted at a certain distance from each other thus defining an open space in between the two blocks. Further, the hub part comprises a protruding element which is designed to essentially match the open space as defined by the locking blocks. Preferably, but not necessarily, the protruding element is a protruding pivot element but it is equally possible that the protruding element may be in the form of a movable locking pin. The pivot element is preferably pressed continually in the direction towards the pitch bearing of the turbine blade. When locking an unlocked turbine blade, the blade is rotated around its longitudinal axis relative to the hub, and the blade part of the locking device rotates therewith. The hub part of the locking device is fixed relative to the rotor blade. When the blade has turned to a position where hub part and the blade part meet the protruding pivot element will snap into the open space between the two locking blocks thus connecting the two parts to one another locking the blade.

A person skilled in the art will understand that the hub part and blade part respectively are interchangeable, meaning they may switch positions with each other so that the blade part may equally be connected to the rotor hub and vice versa, without affecting the locking function of the invention.

According to yet another aspect of the invention the pivot element is pressed continually towards the turbine blade by the force of a spring element. In a locked mode, the spring element will ensure that the pivot element remains in place within the open space between the locking blocks.

According to yet another aspect of the invention the locking device comprises means for disconnecting the hub part the blade part from one another thus unlocking the device so that the blade may rotate again. Preferably, but not exclusively, the means for disconnecting the pivot element from the open space between the locking blocks comprises an electromagnet which when activated withdraws the spring element so that the pivot element is released from the open space between the two locking blocks. The part which is connected to the rotor blade is thus disconnecting from the part which is connected to the rotor hub, and the rotor blade is free to rotate.

Various aspects and embodiments of the present invention will now be described in connection with the accompanying drawings, in which:
Fig. 1 is a perspective view of a partially schematic rotor hub of a wind turbine revealing internal construction and a preferred version of a locking device according to an embodiment of the invention;
Fig. 2 is a perspective view of a locking device according to a preferred example embodiment of the invention, showing the blade locking device in a locked mode;
Fig. 3A-3C show in series how a blade locking device according to a preferred example embodiment of the invention goes from an unlocked position to a locked position;
Fig. 4A is a plan view of one embodiment of the invention; and
Fig. 4B is a cross-sectional view of the embodiment of fig. 4A taken along the line A-A.

The following detailed description, and the examples contained therein, are provided for the purpose of describing and illustrating certain embodiments of the invention only and are not intended to limit the scope of the invention in any way.

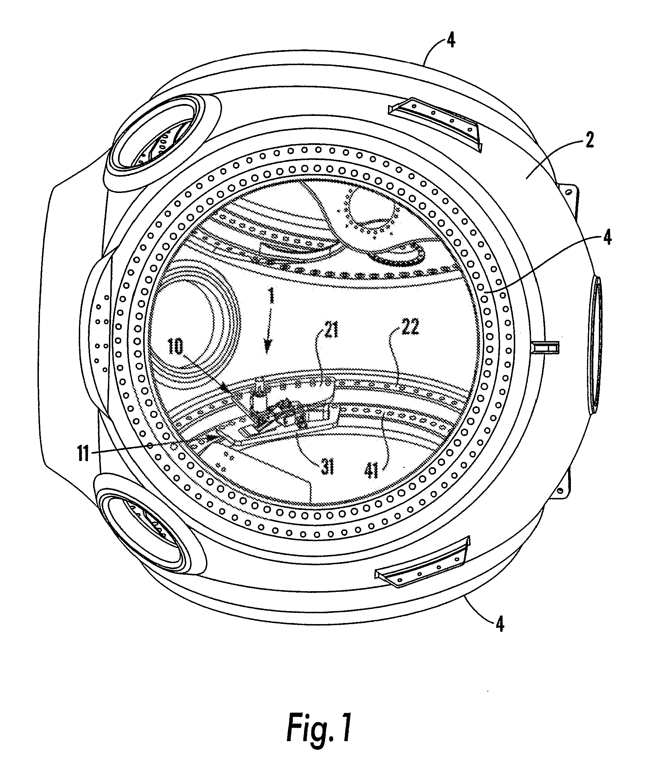

Figure 1 illustrates a rotor hub 2 of a wind power plant with three pitch bearings 4, each for receiving a turbine blade (not shown). Each pitch bearing 4 includes an annular flange 22 which is connected to the hub 2, and an annular bearing ring 41 configured for operable connection with the rotor blade. One pitch bearing 4 is seen to comprise a locking device 1 according to an embodiment of the present invention. The locking device 1 in fig. 1 is shown in a locked mode, preventing the blade (not shown) from rotating around its longitudinal axis relative to the rotor hub 2. As is illustrated by fig. 1, the locking device 1 comprises one hub part 10 which is connected to the flange 22 and one blade part 11 which is connected to the bearing ring 41 of the rotor blade. Each part 10, 11 respectively comprises a mounting plate, whereof one mounting plate 21 is permanently attached to the flange 22 of the hub 2, and one mounting plate 31 is permanently attached to the bearing ring 41 of the rotor blade. The two parts 10, 11 are interconnected by a snap-in mechanism whereby the pitch bearing 4 is locked in a predetermined position, which predetermined position depends on where on the pitch bearing 4 the locking device 1 is attached.

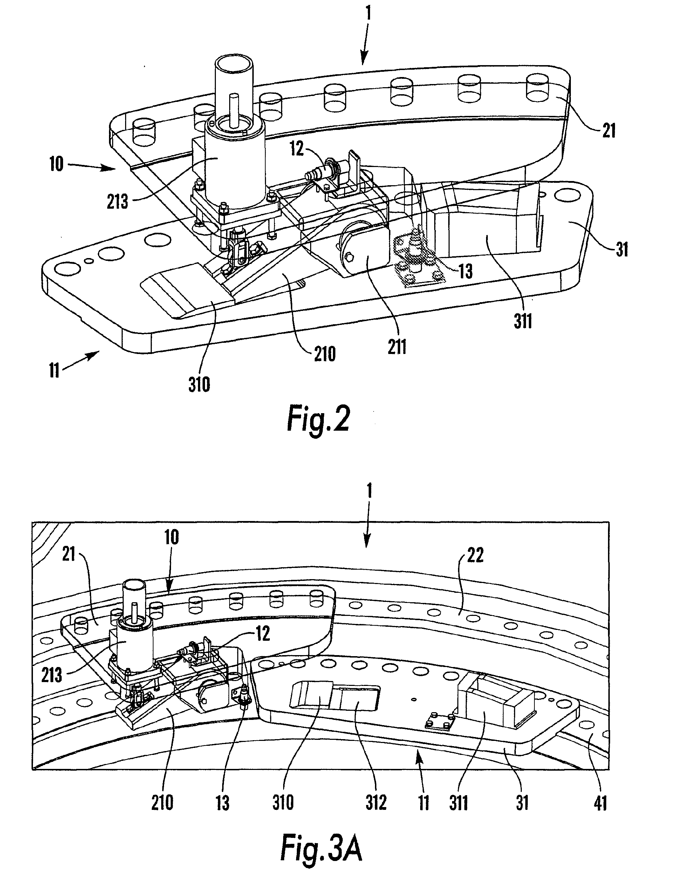

Figure 2 further illustrates the preferred details of the blade lock device 1. The device is seen once again in a locked mode, the two parts 10, 11 being interconnected by a snap-in mechanism. The plate 21 which is permanently attached to the flange 22 comprises a protruding pivot element 210 mounted to and kept in place by a holding block 211. The pivot element 210 is continually pressed towards plate 31 by means of a spring element 213. The plate 31 is permanently attached to the bearing ring 41 of the rotor blade. More specifically, the pivot element 210 is pressed into an open space such as defined by two locking blocks 310, 311 mounted onto the plate 31 which is permanently connected to the bearing ring 41. The two locking blocks 310, 311 are positioned so as to receive and withhold the pivot element 210 and the holding block 211 leading to that the pitch bearing 4 is fixated and the turbine blade (not shown) and the rotor hub 2 are locked in relation to each other. Further, the locking device according to this embodiment of the present invention preferably comprises sensors 12, 13. One sensor 12 indicates the position of the pivot element (lifted or lowered) and one sensor 13 indicates the position of the mounting plate 21 attached to the hub relative the position of the mounting plate 31 attached to the rotor blade, meaning the sensor 13 indicates whether the device 1 is in a locked or in an unlocked position.

Figures 3A-3C shows in series how locking of a turbine blade by a locking device 1 according to an embodiment of the present invention is achieved by the snap-in mechanism. In Fig. 3A is seen the two parts 10, 11 with their respective mounting plates 21, 31 of a locking device 1 in an unlocked mode, the bearing ring 41 of the rotor blade being turned in relation to the hub 2 in such a way that the two parts 10, 11 are disconnected and separated from each other. The spring element 213 is continually urging the pivot element 210 towards the bearing ring 41 so that at least one portion of the protruding pivot element 210 continually touches the bearing ring 41. The pivot element 210 is mounted onto a holding block 211, and may pivot around its holding axis.

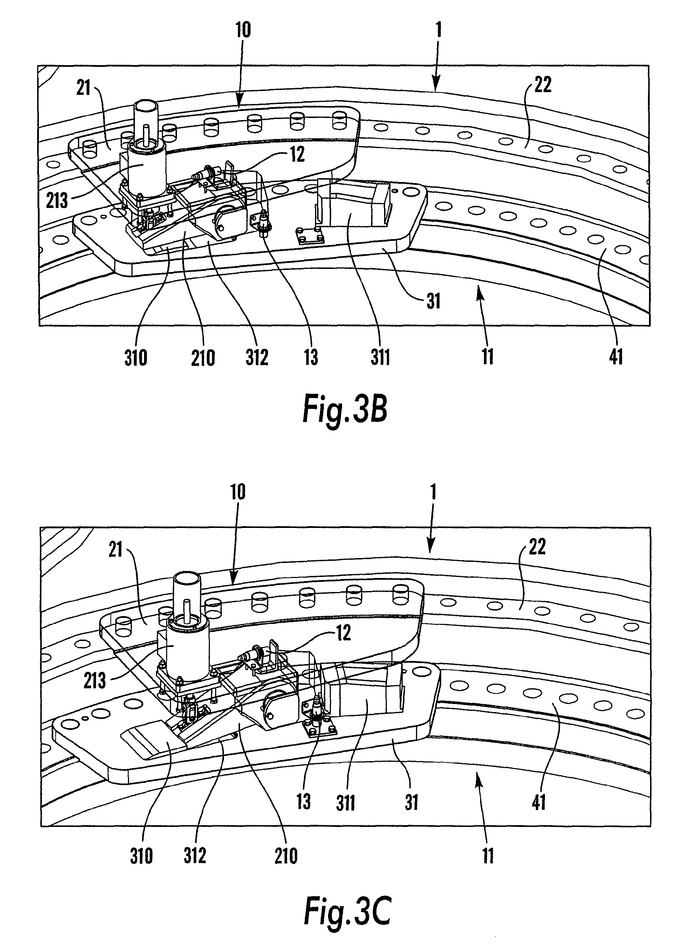

As is seen in Fig. 3B the rotor blade has turned relative to the rotor hub 2 and, consequently, the bearing ring 41 has moved relative to the flange 22 in such a manner that mounting plate 31 has approached mounting plate 21. The movement will lead to that the front locking block 310 enters in and under protruding element 210 urging it to pivot upwards. This is facilitated due to the preferably ramp-like shape of the locking block 310 which allows the pivot element 210 to slide up and onto the upper surface of the locking block 310, as seen in fig. 3B.

Finally, Fig. 3C shows the locking device 1 according to a preferred aspect of the invention in a locked mode, after that the snap-in mechanism has been activated.

Here, the bearing ring 41 has turned a bit further compared to fig. 3B causing the pivot element 210 to slide further on top of the ramp-like locking block 310 until, at one point, the pivot element slides over and crosses the edge of block 310, and snaps into the space between the two distanced locking blocks 310, 311. The snap-in mechanism is achieved thanks to the spring element 213 which presses the pivot element 210 downwards all through the process. A groove 312 in plate 31 positioned directly after the locking block 310 is dimensionally adapted to the shape of the pivot element 210 in order to receive and retain the same.

Once in a locked position the turbine blade is prevented from further turning in at least three ways. First the spring force will keep the pivot element 210 pressed downward relative to the flange 22 . Second, the tip portion of the pivot element 210 lies adjacent to the rear vertical edge of locking block 310 which stops turning in one direction, and third the holding block 211 is adjacent to the second locking block 311 of the locking device 1 which stops turning in the other direction.

The pivot element 210 and the holding block 211 together essentially matches the space between the two locking blocks 310, 311. Once the plates 21, 31 which are connected to the flange 22 and the bearing ring 41 respectively are brought adjacently to one another and are interconnected as in fig. 3C, the rotor blade will be fixed relative to the hub 2 and is unable to turn around its longitudinal axis. The pitch angle of the blade is thus locked.

In order to unlock the device 1 according to the invention, the pivot element 210 is retracted from the space between the locking blocks 310, 311 by pivoting upwards relative to the bearing ring 41. Such a retraction may be achieved for instance by integrating an electromagnet with the spring element 213. The electromagnet may be activated so that the spring is retracted and lifts the pivot element 210 from a locked position in between the locking blocks 310, 311.

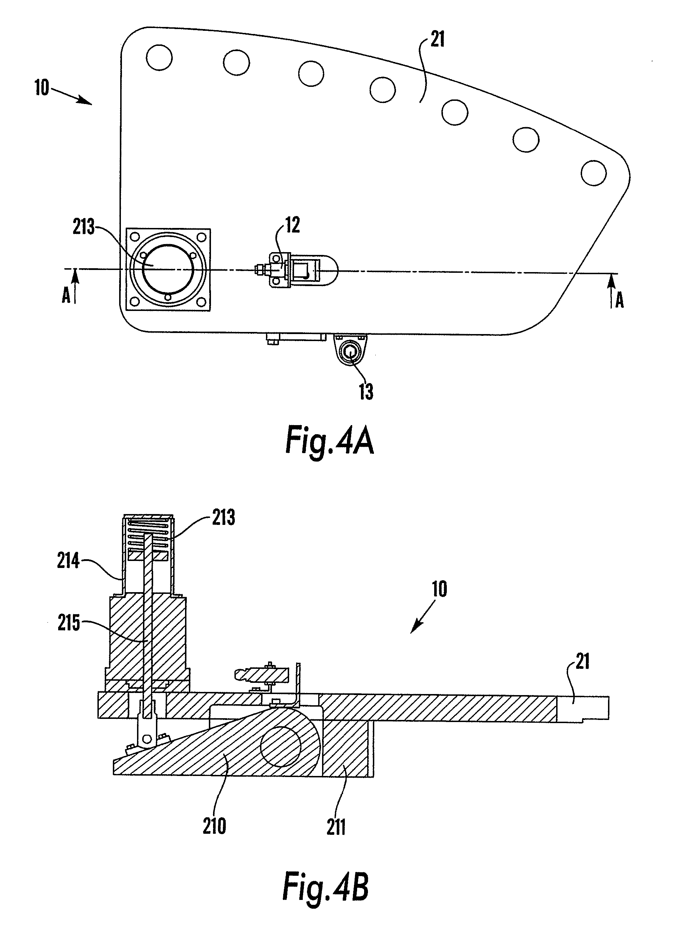

Figures 4A-B show the hub part 10 of the locking device 1 which is permanently connected to the flange 22 of the rotor hub 2. Fig. 4A is a plan view thereof and shows the mounting plate 21 from above, and Fig. 4B is a cross-sectional view taken along line A-A of Fig. 4A. Here is seen that the spring element 213 is mounted within a spring housing 214 and is further connected to the pivot element 210 through a bar 215 which is fastened to the upper side of the pivot element 210.

The invention is not to be seen as limited by the embodiments described above, but can be varied within the scope of the appended claims. For instance, the pivot element 210 may be differently shaped than herein described, and one wind power plant may comprise more than one installed blade lock devices 1. Many other variations are also possible, as will be readily understood by the person skilled in the art.

## Claims

1. A locking device (1) for locking a turbine blade of a wind power plant at a predetermined pitch angle, which wind power plant comprises a rotor hub (2) arranged to support at least one turbine blade, wherein the locking device (1) for the at least one turbine blade is connected to the rotor hub by means of a pitch bearing (4) arranged to enable the pitch angle of the at least one turbine blade adjustable by turning of the at least one turbine blade about its longitudinal axis relative to the rotor hub (2),
wherein the locking device (1) comprises a mechanical snap-in mechanism which in a locked position prevents the at least one turbine blade from turning about its longitudinal axis thus fixating the at least one turbine blade in the predetermined pitch angle, wherein the locking device (1) further comprises a hub part (10) which is permanently connected to the rotor hub (2) and a blade part (11) which is permanently connected to the at least one turbine blade, which parts (10, 11) in a locked mode are connected to one another by the snap-in mechanism for preventing further turning of the at least one turbine blade in any direction.

2. The locking device (1) according to claim 1, wherein the predetermined pitch angle corresponds to a feathering position of the at least one turbine blade.

3. The locking device (1) according to claim 1 or 2, wherein the blade part (11) comprises at least a first (310) and a second (311) locking block mounted at a certain distance from each other thus defining an open space, wherein the hub part (10) comprises a protruding element (210) which is designed to essentially match the open space as defined by the locking blocks (310, 311), and wherein the locked mode corresponds to a position where the protruding element (210) is positioned within the open space.

4. The locking device (1) according to claim 3, wherein the protruding element is a pivot element (210) which is pressed continually in the direction towards a bearing ring (41) of the at least one turbine blade.

5. The locking device (1) according to claim 3 or 4, wherein the protruding element (210) is pressed continually into the open space as defined by the locking blocks (310, 311) for connecting the hub part (10) and the blade part (11) to one another for preventing further turning of the at least one turbine blade in relation to the rotor hub (2).

6. The locking device (1) according to any of claims 3 to 5, wherein the protruding element (210) is pressed continually by the force of a spring element (213).

7. The locking device (1) according to any preceding claim, further comprising means for detaching the hub part (10) and the blade part (11) from one another by means of moving the protruding element (210) away from the open space.

8. The locking device (1) according to claim 7, wherein the means for detaching the hub part (10) and the blade part (11) from one another comprises an electromagnet which in active mode is arranged to contract the spring element (213) to achieve movement of the protruding element (21) away from the open space.

9. A method for locking a turbine blade of a wind power plant at a predetermined pitch angle, comprising the steps of:
a. providing a wind power plant with a rotor hub (2) and at least one turbine blade where the blade root of the at least one turbine blade is connected to the rotor hub through a pitch bearing (4);
b. mounting a locking device (1) for the at least one turbine blade at a predetermined position onto the pitch bearing (4) between the blade root and the rotor hub (2); and
c. adjusting the at least one turbine blade by turning it about its longitudinal axis relative to the rotor hub (2) into a predetermined position where the snap-in mechanism of the device (1) for locking the at least one turbine blade is activated and locks the pitch angle of the at least one turbine blade in the predetermined position.

10. The method according to claim 9, wherein the predetermined position for mounting the locking device (1) on the at least one turbine blade corresponds to a position where the at least one turbine blade is in a feathered position.
